# EUROPEAN PATENT APPLICATION

(11) **EP 1 722 089 A1**
(43) Date of publication of application: **15.11.2006**
(21) Application number: 05709878.2
(22) Date of filing: 08.02.2005
(51) Int. Cl.: F02D 41/14, F01N 3/22, F01N 3/28, F01N 3/34, F02D 41/04

(54) **EXHAUST GAS PURIFYING DEVICE FOR ENGINE**

(30) Priority: 09.02.2004 JP 2004032169
(71) Applicant: YAMAHA HATSUDOKI KABUSHIKI KAISHA, Iwata-shi, Shizuoka 438-8501 (JP)
(72) Inventor: NISHIMURA, Hidehiro, YAMAHA HATSUDOKI K. KAISHA, Iwata-shi, Shizuoka 4388501 (JP); TAKII, Osamu, YAMAHA HATSUDOKI KABUSHIKI KAISHA, Iwata-shi, Shizuoka 4388501 (JP); OOBA, Junichi, YAMAHA HATSUDOKI KABUSHIKI KAISHA, Iwata-shi, Shizuoka 4388501 (JP)
(74) Representative: Grünecker, Kinkeldey, Stockmair & Schwanhäusser Anwaltssozietät
(86) International application number: PCT/JP2005/001826
(87) International publication number: WO 2005/075805

(57) **Abstract**

To provide an exhaust gas purifying apparatus for an engine, which ensures high performance of the exhaust gas purification and a sufficient engine power output. The exhaust gas purifying apparatus for an engine (1) includes: a catalyst (10) disposed in an exhaust pipe (7) connected to an exhaust port of the engine (1); a secondary air introducing pipe (12), connected at a secondary air introducing port (11) of the exhaust pipe (7) provided on the upstream of the catalyst (10), for introducing secondary air into the exhaust pipe (7) in accordance with a negative pressure created at the secondary air introducing port (11); an O₂ sensor (14), disposed in the exhaust pipe (7) on the downstream of the secondary air introducing port (11), for detecting oxygen concentration to obtain the air-fuel ratio of the exhaust gas passed through the catalyst (10); and a controller (15) for controlling a fuel quantity to be supplied from a fuel injection valve (3) to the engine (1) such that the air-fuel ratio based on the oxygen concentration detected by the O₂ sensor (14) becomes its target ratio. The O₂ sensor (14) is provided for detecting the oxygen concentration in an expansion chamber within a silencer (8).

## Description

### Technical Field

This invention relates to an exhaust gas purifying apparatus for an engine.

### Background Art

A conventional type of exhaust gas purifying apparatus for an engine, provided with an O₂-feedback fuel supply system, has: a three-way catalyst located partway along an engine exhaust pipe; and an O₂ sensor provided on the upstream of such catalyst for detecting an oxygen concentration in the exhaust gas. It is designed to feedback-control the fuel quantity to be injected to the engine such that the air-fuel ratio, which is obtained based on the oxygen concentration detected by the O₂ sensor, is adjusted to its theoretical ratio. This type of exhaust gas purifying apparatus is disclosed, for example, in the publication of JP-A-2000-310116.

Additionally, the publication of JP-A-Hei 5-321653 proposes another type of such apparatus having: a secondary air introducing pipe connected to the exhaust pipe on the upstream of the three-way catalyst; and an O₂ sensor provided on the downstream of the three-way catalyst. It is designed to feedback-control the secondary air quantity such that the air-fuel ratio calculated based on a value detected by the O₂ sensor is adjusted to equal to or slightly richer than its theoretical ratio, thereby obtaining a high purification rate for the NOx, CO and HC components of the exhaust gas.

### Disclosure of the Invention

### Problem to be Solved by the Invention

However, any conventional type of exhaust gas purifying apparatus controls the fuel supply quantity so as to maintain the air-fuel ratio at its theoretical ratio. This results in the engine operation in a narrow air-fuel ratio range around its theoretical ratio. Thus, the engine power output required may not be obtained sufficiently depending on the engine operation range. This creates a problem that a rider may feel uneasy riding due to the insufficient engine power output in the case that the aforementioned conventional exhaust gas purifying apparatus is applied to smaller-displacement engines for smaller vehicles, such as motorcycles, compared to car engines.

The present invention is made in view of the foregoing problem, and an object of the invention is to provide an exhaust gas purifying apparatus for an engine, which ensures high performance of the exhaust gas purification and a sufficient engine power output.

Another object of the invention is to provide an exhaust gas purifying apparatus for an engine, which prevents a significant increase in exhaust resistance by using an O₂ sensor and other sensors for detecting the oxygen concentration and other basic data to obtain the air-fuel ratio of the exhaust gas passed through a catalyst.

### Means for Solving the Problem

In order to solve the above problem, the present invention provides an exhaust gas purifying apparatus for an engine including: a catalyst disposed in an exhaust pipe connected to an exhaust port of the engine; a secondary air introduction unit, connected at a connection point of the exhaust pipe provided on the upstream of the catalyst, for introducing secondary air into the exhaust pipe in accordance with a negative pressure created at the connection point; a sensor, disposed in the exhaust pipe on the downstream of the connection point of the secondary air introduction unit, for detecting basic data to obtain the air-fuel ratio of the exhaust gas passed through the catalyst; and a means for controlling a fuel quantity to be supplied from a fuel supply system to the engine such that the air-fuel ratio based on the basic data detected by the sensor becomes its target ratio.

The basic data may include those which indicate the oxygen concentration in the exhaust gas or the air-fuel ratio itself, for example. In addition, the target ratio may be a theoretical air-fuel ratio. Moreover, the engine may be a four-stroke engine. The catalyst is an oxidation catalyst or three-way catalyst. Furthermore, the sensor may be provided either on the upstream or downstream of the catalyst.

In the present invention, the air-fuel ratio of the mixture to be supplied to the engine could be preset to a richer ratio of 10-14, namely, the air-fuel ratio for maximum power output. This results in a sufficient engine power output. "Air-fuel ratio for maximum power output" means a ratio of 10-14, which is substantially richer than the theoretical ratio of 14.6 (λ=1).

Introducing the secondary air allows the exhaust gas of the target air-fuel ratio to be supplied to the catalyst. The components of the exhaust gas, NOₓ, CO and HC, can thus be purified together with the catalyst. This results in a sufficient engine power output while ensuring high performance of the exhaust gas purification. Therefore, even if the exhaust gas purifying apparatus is used for a small vehicle, such as motorcycle, it can suppress the problem that the rider may feel uneasy riding due to the insufficient engine power output.

According to one aspect of the present invention, a downstream end of the exhaust pipe is housed within a silencer, the silencer is provided with plural expansion chambers, and the sensor is so disposed as to detect the basic data in any of the expansion chambers. This can prevent exhaust resistance from increasing due to the sensor.

The present invention also provides an exhaust gas purifying apparatus for an engine of another aspect, including: a catalyst disposed in an exhaust pipe connected to an exhaust port of the engine; a secondary air introduction unit, connected at a connection point of the exhaust pipe provided on the upstream of the catalyst, for introducing secondary air into the exhaust pipe; a silencer having plural expansion chambers and accommodating a downstream end of the exhaust pipe; a sensor for detecting basic data within any of the plural expansion chambers to obtain the air-fuel ratio of the exhaust gas passed through the catalyst; and a means for controlling the air-fuel ratio of the exhaust gas passed through the catalyst based on the basic data detected by the sensor. This invention can prevent exhaust resistance from increasing due to the sensor.

According to one aspect of the present invention, the sensor is so provided as to detect the basic data in the most upstream one of the plural expansion chambers. This allows the sensor to immediately detect variations in the basic data.

According to one aspect of the present invention, the exhaust pipe has a curved portion formed into a U-shape, the downstream end of the exhaust pipe is housed within the silencer together with the curved portion, and the sensor is so provided as to detect the basic data in the closest one of the plural expansion chambers to the engine. This allows the sensor to be placed in the expansion chamber, which is positioned closest to the engine and on the most upstream, thereby facilitating wiring of the sensor.

According to one aspect of the present invention, the sensor is so disposed as to detect the basic data on a flow path in the expansion chamber for the exhaust gas discharged from the exhaust pipe to the expansion chamber. This allows the sensor to immediately detect variations in the basic data.

In this case, the sensor may be so provided as to detect the basic data in an area forward (in the exhaust gas discharge direction) of the downstream end opening of the exhaust pipe. This allows the sensor to further immediately detect variations in the basic data.

### Brief Description of Drawings

FIG. 1 is a schematic structural view of an engine gas purifying apparatus for four-stroke engine according to an embodiment of the present invention.
FIG. 2 is a sectional view, showing a silencer provided with an O₂ sensor of the exhaust gas purifying apparatus shown in FIG. 1.
FIGs. 3(a) and 3(b) are schematic views, showing another example for which the O₂ sensor is attached to the exhaust gas purifying apparatus; in which FIG. 3(a) schematically illustrates a sectional view of the silencer provided with the O₂ sensor while FIG. 3 (b) schematically illustrates the silencer viewed from the front of the vehicle.
FIGs. 4 (a) and 4 (b) are schematic views, showing still another example for which the O₂ sensor is attached to the exhaust gas purifying apparatus; in which FIG. 4(a) schematically illustrates a sectional view of the silencer provided with the O₂ sensor while FIG. 4 (b) schematically illustrates the silencer viewed from the front of the vehicle.
FIGs. 5 (a) and 5 (b) are schematic views, showing still another example for which the O₂ sensor is attached to the exhaust gas purifying apparatus; in which FIG. 5(a) schematically illustrates a sectional view of the silencer provided with the O₂ sensor while FIG. 5 (b) schematically illustrates the silencer viewed from the front of the vehicle.
FIG. 6 is a schematic structural view of an engine gas purifying apparatus for four-stroke engine according to another embodiment of the present invention.

### Best Mode for Carrying Out the Invention

An embodiment of the present invention will be described below with reference to the accompanying drawings.

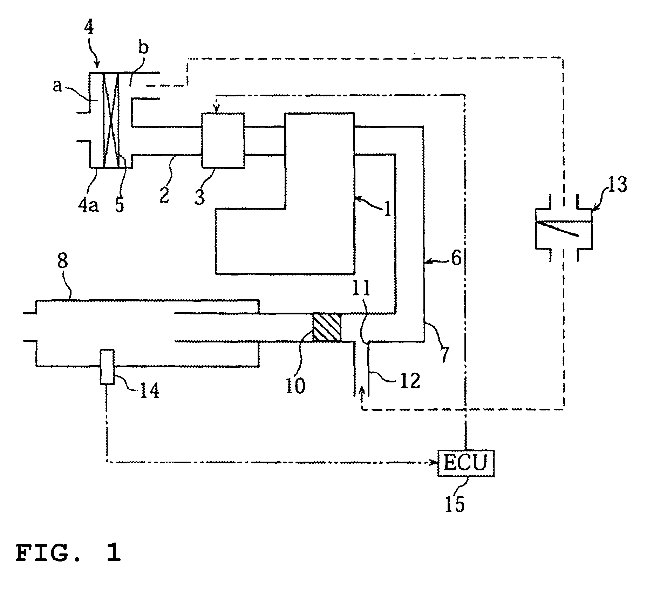

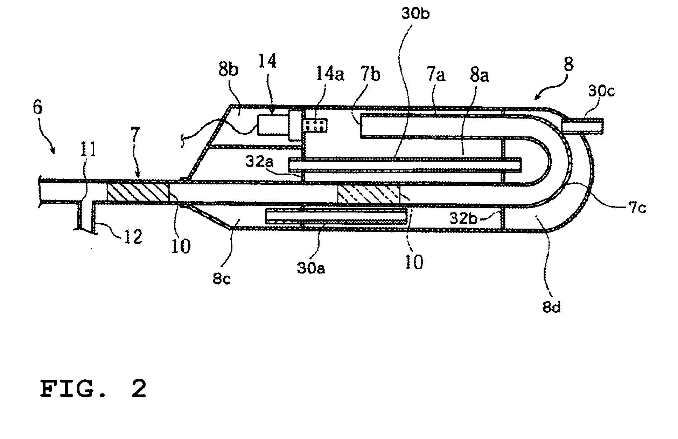

FIGs. 1 and 2 are explanatory views of the exhaust gas purifying apparatus for four-stroke engines according to an embodiment of the present invention. FIG. 1 is a schematic structural view of the exhaust gas purifying apparatus. FIG. 2 is a sectional view, showing a silencer provided with an O₂ sensor. The exhaust gas purifying apparatus is mounted to a motorcycle, for instance.

In these figures, an engine 1 is a four-cycle (four-stroke) engine preferred for motorcycles. To an intake passage 2 connected to an intake port (not shown) of the engine 1 is connected a fuel injection valve (fuel supply component) 3 for injecting fuel to the intake port. An air cleaner 4 is connected to the upstream end of the intake passage 2. The air cleaner 4 has a cleaner case 4a which is defined into an air intake side (a) and discharge side (b) by an element 5.

An exhaust system 6 for discharging the exhaust gas outside is connected to an exhaust port (not shown) of the engine 1. The exhaust system 6 includes an exhaust pipe 7 connected to the exhaust port and a silencer 8 connected to the downstream end 7a of the exhaust pipe 7. As shown in FIG. 2, the exhaust pipe 7 has a curved portion 7c, which is formed into generally a U-shape and housed within the silencer 8 together with the downstream end 7a of the exhaust pipe 7.

More specifically, the silencer 8 has an internal chamber, which is divided by partitions 32a and 32b, forming a first, second and third expansion chambers 8a, 8c, 8d, respectively. A communication pipe 30a penetrating the partition 32a allows the first expansion chamber 8a and the second expansion chamber 8c to be communicated with each other through which the exhaust gas can flow. In addition, a communication pipe 30b penetrating the partitions 32a and 32b allows the second expansion chamber 8c and the third expansion chamber 8d to be communicated with each other through which the exhaust gas can flow. Furthermore, a communication pipe 30c is attached to the outer wall of the third expansion chamber 8d through which the exhaust gas within the third expansion chamber 8d is released outside.

As shown in FIG. 2, an exhaust gas purifying apparatus is provided for the exhaust system 6. The exhaust gas purifying apparatus has a three-way catalyst 10 disposed in the exhaust pipe 7 on the upstream of the silencer 8. A secondary air introducing port 11 is formed on the upstream of the three-way catalyst 10 in the exhaust pipe 7. A secondary air introduction unit is connected to the air introducing port 11.

The three-way catalyst 10 may be provided within the silencer 8 in the exhaust pipe 7 as shown by a phantom line in FIG. 2.

In the secondary air introduction unit, the discharge side (b) of the air cleaner 4 and the secondary air introducing port 11 are communicated through a secondary air introducing pipe 12. Partway along the secondary air introducing pipe 12, a lead valve 13, which functions as a check valve, is interposed.

The lead valve 13 permits the secondary air to flow only from the air cleaner 4 side to the exhaust pipe 7 side while inhibiting the flow in the other direction. To be more specific, exhaust pulsation due to opening and closing an intake and exhaust valves (not shown) of the engine 1 creates a negative pressure within the exhaust pipe 7 including the secondary air introducing port (connection point) 11. The negative pressure then causes the lead valve 13 to be open, and the air on the discharge side (b) of the air cleaner 4 is drawn into the exhaust pipe 7.

An O₂ sensor 14 is disposed on the downstream of the connection point at the secondary air introducing pipe 12 in the exhaust pipe 7, more particularly, on the downstream of the three-way catalyst 10. The base of the O₂ sensor 14 is disposed in a sensor chamber 8b, which is divided from the first expansion chamber 8a in the silencer 8. A detecting portion 14a of the O₂ sensor 14 is so placed as to face a downstream end opening 7b of the exhaust pipe 7. The detecting portion 14a of the O₂ sensor 14 is positioned in the silencer 8 on a flow path for the exhaust gas discharged from the exhaust pipe 7 to the first expansion chamber 8a. This allows the detecting portion 14a of the O₂ sensor 14 to constantly come into contact with fresh exhaust gas, which improves the detection accuracy. In this embodiment, the detecting portion 14a is so provided as to face the downstream end opening 7b of the exhaust pipe 7 to allow the O₂ sensor 14 to detect the oxygen concentration in an area forward of the downstream end opening 7b (in the exhaust gas discharge direction). However, the detecting portion 14a may be positioned in a different location within the silencer 8. In such a case, the detecting portion 14a may be preferably positioned in the silencer 8 on a flow path for the exhaust gas, such as on the upstream or downstream end of the communication pipes 30a and 30b. Also, in this case, the O₂ sensor 14, which detects the oxygen concentration, is used as a sensor for detecting the basic data in order to obtain the air-fuel ratio of the exhaust gas. However, it may be replaced with an air-fuel ratio sensor for detecting the air-fuel ratio.

As described above, in the embodiment of the present invention, the O₂ sensor 14 is placed in the sensor chamber 8b divided from the first expansion chamber 8a of the silencer 8. This can reduce the affect of the heat from the exhaust gas. The O₂ sensor 14 can also be exposed outside of the silencer 8 as an appearance part, maintaining a neat appearance around the silencer 8. Additionally, the O₂ sensor 14 thus placed in this embodiment can be prevented from breakage caused by tampering or external force. Furthermore, the O₂ sensor 14 arranged within the silencer 8 can reduce exhaust resistance compared to the arrangement within the exhaust pipe 7.

The apparatus according to the embodiment of the present invention has a controller 15 for controlling the fuel injection quantity such that the air-fuel ratio can be adjusted to its target ratio corresponding to the oxygen concentration in the exhaust gas, which is detected by the O₂ sensor 14.

In the embodiment of the present invention, the quantity of the secondary air to be introduced by the secondary air introduction unit is a fixed amount determined depending on the mechanical characteristics, such as a capacity of the lead valve 13 and path resistance in the secondary air introducing pipe 12. In contrast, the basic fuel injection quantity is calculated by the controller 15 based on the engine speed and throttle opening. This calculated quantity is then corrected such that the air-fuel ratio of the mixture, which is obtained based on the oxygen concentration in the exhaust gas detected after introducing the secondary air, becomes approximately the theoretical ratio. Therefore, the air-fuel ratio of the mixture to be supplied to the engine 1 becomes 10 to 14, namely, the air-fuel ratio for maximum power output. This can result in a sufficient engine power output. Thus, providing the apparatus according to the embodiment of the present invention for the engine for a small vehicle, such as a motorcycle, can suppress the problem that the rider may feel uneasy riding due to the insufficient power output.

Also, in the embodiment of the present invention, the secondary air introducing pipe 12 is communicated with the exhaust pipe 7 on the upstream of the three-way catalyst 10 disposed within the exhaust pipe 7 to introduce the secondary air into the exhaust gas due to the exhaust pulsation. This allows the air-fuel ratio in the exhaust gas, to be supplied to the three-way catalyst 10, to become approximately the theoretical ratio. Three components of the exhaust gas, NOₓ, CO and HC, can thus be purified together with the three-way catalyst 10, which can ensure high performance of the exhaust gas purification as with the conventional apparatuses.

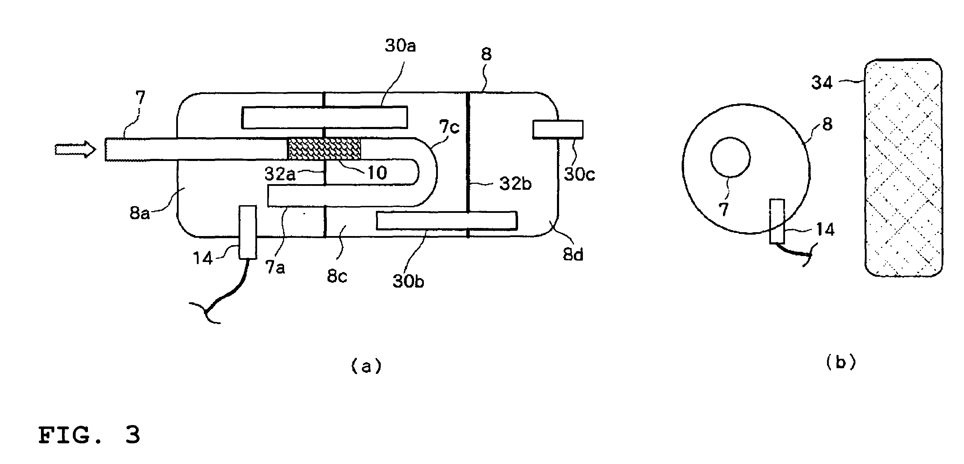

In FIG. 2, within the silencer 8 is provided the sensor chamber 8b from which the detecting portion 14a of the O₂ sensor 14 extends toward the first expansion chamber 8a. However, as shown in FIG. 3, the O₂ sensor 14 may be directly provided on the outside and at the bottom of the silencer 8 located sideward of a rear wheel 34 for a motorcycle, from which the detecting portion 14a extends into the first expansion chamber 8a. In this case also, the O₂ sensor 14 may be preferably positioned such that the exhaust gas discharged from the downstream end 7a of the exhaust pipe 7 flows directly to the detecting portion.

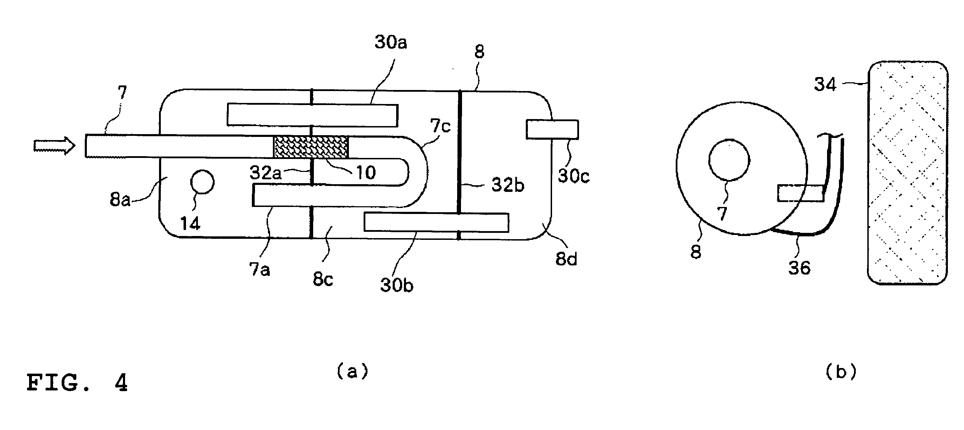

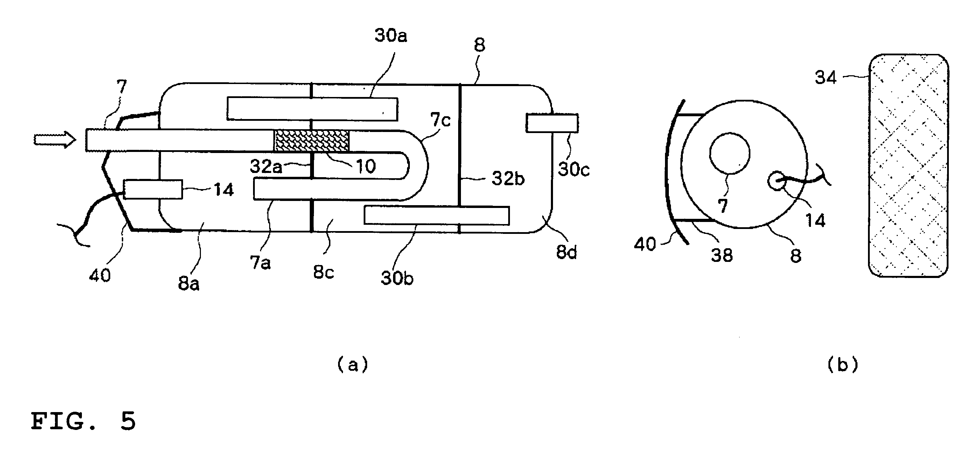

As shown in FIG. 4, the O₂ sensor 14 may also be placed on the outside of the silencer 8, more particularly, on the rear wheel 34 side, from which the detecting portion can extend into the first expansion chamber 8a. In this case, a guard plate 36 is preferably provided to protect part of the O₂ sensor 14, which is exposed outside of the silencer 8. Furthermore, as shown in FIG. 5, the O₂ sensor 14 may also be placed at the end face of the cylindrical silencer 8, that is the forward end face to the vehicle, from which the detecting portion extends into the first expansion chamber 8a. In such a case, a protective plate 40 is disposed on the outer side of the silencer 8 with a support member 38 interposed therebetween in order to prevent the rider from touching the high-temperature silencer 8. The protective plate 40 also helps maintain a neat appearance of the vehicle if it is extended toward the front of the vehicle to cover the base of the O₂ sensor 14. In FIGs. 3 and 5, reference numerals, which are the same as in Fig. 2, designate the same or equivalent parts.

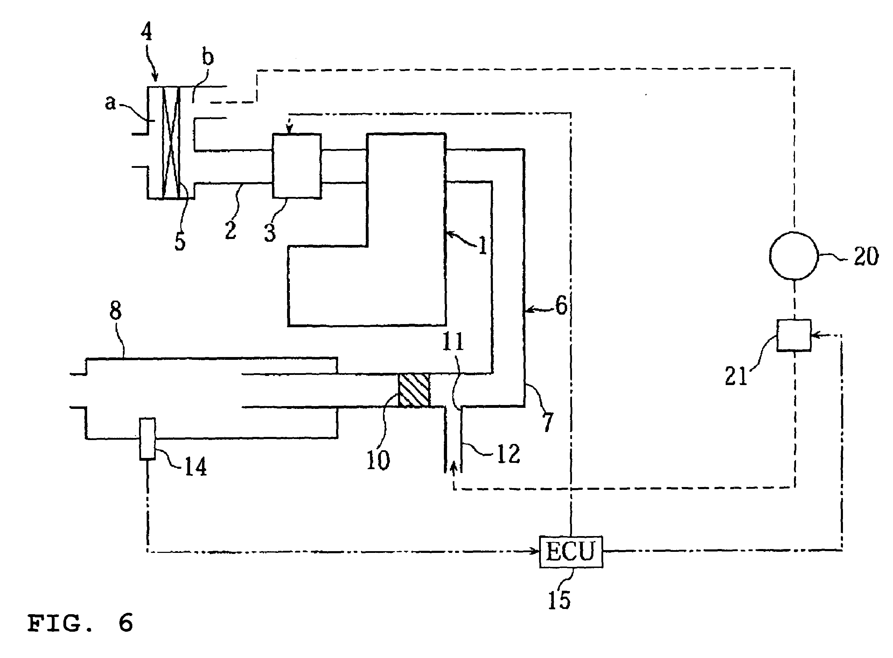

Next, FIG. 6 is a schematic structural view for explaining the exhaust gas purifying apparatus for four-stroke engine according to another embodiment of the present invention. In FIG. 6, the same reference numerals as those in Fig. 1 show the same parts or equivalent parts.

The exhaust gas purifying apparatus shown in FIG. 6 has: a three-way catalyst 10 disposed in an exhaust pipe 7 connected to an exhaust port; an O₂ sensor 14 provided on the downstream of the three-way catalyst 10; and a secondary air introducing pipe 12 for introducing the secondary air, which is communicated with the exhaust pipe 7 on the upstream of the three-way catalyst 10. This has a basic structure common to the apparatus of FIG. 1.

Exceptionally, an air pump 20 is located partway along the secondary air introducing pipe 12 and therefore an air flow rate adjusting valve 21 on the downstream of the air pump 20.

A controller 15 controls the fuel quantity to be injected from a fuel injection valve 3 such that the air-fuel ratio of the mixture to be supplied to an engine 1 becomes the air-fuel ratio for maximum power output. The controller 15 also controls the quantity of the secondary air to be supplied into the exhaust pipe 7 by opening or closing the air flow rate adjusting valve 21 such that the air-fuel ratio obtained based on the O₂ concentration in the exhaust gas on the downstream of the three-way catalyst 10 becomes approximately the theoretical ratio.

In the embodiment of the present invention, the fuel injection quantity is so controlled that the air-fuel ratio of the mixture to be supplied to the engine 1 is adjusted to achieve maximum power output. Also, the secondary air quantity is so controlled that the air-fuel ratio, obtained based on the O₂ concentration in the exhaust gas on the downstream of the three-way catalyst 10, becomes approximately the theoretical ratio. This can provide a sufficient engine power output and high performance of the exhaust gas purification.

Controlling not only the fuel injection quantity but also the secondary air quantity could allow adjusting the air-fuel ratio of the mixture, supplied to the engine, to its theoretical ratio without introduction of the secondary air. Controlling them in such a manner enables the fuel offering the constant performance of the exhaust gas purification to improve.

## Claims

1. An exhaust gas purifying apparatus for an engine comprising:
a catalyst disposed in an exhaust pipe connected to an exhaust port of the engine;
a secondary air introduction unit, connected at a connection point of the exhaust pipe provided on the upstream of the catalyst, for introducing secondary air into the exhaust pipe in accordance with a negative pressure created at the connection point;
a sensor, disposed in the exhaust pipe on the downstream of the connection point of the secondary air introduction unit, for detecting basic data to obtain the air-fuel ratio of exhaust gas passed through the catalyst; and
a means for controlling a fuel quantity to be supplied from a fuel supply system to the engine such that the air-fuel ratio based on the basic data detected by the sensor becomes its target ratio.

2. The exhaust gas purifying apparatus for an engine according to Claim 1,
wherein the target ratio is a theoretical air-fuel ratio.

3. The exhaust gas purifying apparatus for an engine according to Claim 1,
wherein a downstream end of the exhaust pipe is housed within a silencer,
the silencer is provided with plural expansion chambers, and
the sensor is so disposed as to detect the basic data in any of the expansion chambers.

4. An exhaust gas purifying apparatus for an engine comprising:
a catalyst disposed in an exhaust pipe connected to an exhaust port of the engine;
a secondary air introduction unit, connected at a connection point of the exhaust pipe provided on the upstream of the catalyst, for introducing secondary air into the exhaust pipe;
a silencer having plural expansion chambers and accommodating a downstream end of the exhaust pipe;
a sensor for detecting basic data within any of the plural expansion chambers to obtain the air-fuel ratio of the exhaust gas passed through the catalyst; and
a means for controlling the air-fuel ratio of the exhaust gas passed through the catalyst based on the basic data detected by the sensor.

5. The exhaust gas purifying apparatus for an engine according to Claim 3 or 4,
wherein the sensor is so provided as to detect the basic data in the most upstream one of the plural expansion chambers.

6. The exhaust gas purifying apparatus for an engine according to Claim 3 or 4,
wherein the exhaust pipe has a curved portion formed into a U-shape,
the downstream end of the exhaust pipe is housed within the silencer together with the curved portion, and
the sensor is so provided as to detect the basic data in the closest one of the plural expansion chambers to the engine.

7. The exhaust gas purifying apparatus for an engine according to Claim 3 or 4,
wherein the sensor is so disposed as to detect the basic data on a flow path in the expansion chamber for the exhaust gas discharged from the exhaust pipe to the expansion chamber.

8. The exhaust gas purifying apparatus for an engine according to Claim 7,
wherein the sensor is so provided as to detect the basic data in an area forward of the downstream end opening of the exhaust pipe.
